(19) Europäisches Patentamt
European Patent Office
Office européen des brevets

(11) **EP 2 945 793 B1**

## (12) EUROPÄISCHE PATENTSCHRIFT

(45) Veröffentlichungstag und Bekanntmachung des Hinweises auf die Patenterteilung:
**08.03.2017 Patentblatt 2017/10**

(21) Anmeldenummer: **14700181.2**

(22) Anmeldetag: **09.01.2014**

(51) Int Cl.:
*B29C 65/08* (2006.01)    *B06B 1/06* (2006.01)
*B06B 3/00* (2006.01)    *B65B 7/18* (2006.01)
*B65B 51/16* (2006.01)    *B65B 51/22* (2006.01)

(86) Internationale Anmeldenummer:
**PCT/EP2014/050281**

(87) Internationale Veröffentlichungsnummer:
**WO 2014/111300 (24.07.2014 Gazette 2014/30)**

(54) **ULTRASCHALLSCHWEISSVORRICHTUNG MIT SCHWINGUNGSENTKOPPELTEM GEGENWERKZEUG**

ULTRASOUND WELDING DEVICE COMPRISING VIBRATION-DECOUPLED COUNTER TOOL

DISPOSITIF DE SOUDAGE PAR ULTRASONS POURVU D'UN CONTRE-OUTIL À DÉCOUPLAGE VIBRATOIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.01.2013   DE 102013100474**

(43) Veröffentlichungstag der Anmeldung:
**25.11.2015   Patentblatt 2015/48**

(73) Patentinhaber: **Herrmann Ultraschalltechnik GmbH & Co. KG**
**76307 Karlsbad (DE)**

(72) Erfinder: **HERRMANN, Thomas**
**76135 Karlsruhe (DE)**

(74) Vertreter: **WSL Patentanwälte Partnerschaft mbB**
**Kaiser-Friedrich-Ring 98**
**65185 Wiesbaden (DE)**

(56) Entgegenhaltungen:
**WO-A2-2008/037256     FR-A5- 2 082 090**

**Beschreibung**

Die vorliegende Erfindung betrifft eine Ultraschallschweißvorrichtung zur Ultraschallbearbeitung eines Materials mit einer schwingungsentkoppelt gelagerten Sonotrode, welche eine zylindermantelförmige Siegelfläche aufweist, und einem Gegenwerkzeug, wobei ein erster Konverter mit der Sonotrode gegebenenfalls über ein erstes Amplitudentransformationsstück verbunden ist und Sonotrode und erster Konverter derart ausgelegt sind, dass die Sonotrode mit einer Eigenschwingung der Frequenz fs in Schwingung versetzt werden kann.

Die Ultraschallverarbeitung ist ein Verfahren zum Fügen von Kunststoffen. Ultraschall ist eine mechanische Schwingung oberhalb der Hörgrenze. Der Frequenzbereich beginnt bei etwa 20 kHz und erstreckt sich bis zu Frequenzen von 1 GHz. Solche Ultraschallfrequenzen werden häufig mit Hilfe von piezoelektrischen Schallwandlern (Konverter) aus elektrischer Energie erzeugt. Diese mechanische Schwingungsenergie wird über die mit dem Konverter, gegebenenfalls über ein Amplitudentransformationsstück (Booster) verbundene Sonotrode auf das Werkstück bzw. das zu bearbeitende Material aufgebracht. Die Fläche der Sonotrode, die dafür vorgesehen ist, mit dem zu bearbeitenden Material in Kontakt zu treten, wird auch als Siegelfläche bezeichnet.

Die Ultraschallschwingeinheit stellt somit ein im Betrieb schwingendes Gebilde dar und besteht aus dem Konverter, gegebenenfalls dem Amplitudentransformationsstück und der Sonotrode.

Um die Ultraschallschwingung mit Hilfe der Ultraschallschwingeinheit effektiv zu übertragen, ist es notwendig, die Ultraschallschwingeinheit in eine Resonanz zu bringen. Abhängig von dem Aufbau der Ultraschallschwingeinheit weist diese eine Vielzahl von Eigenfrequenzen auf. Nur wenn der Konverter eine Eigenfrequenz der Ultraschallschwingeinheit erzeugt, kommt es zu einer resonanten Schwingung der Ultraschallschwingeinheit. Daher müssen Konverter und Ultraschallschwingeinheit aufeinander abgestimmt werden.

Genau genommen unterscheidet sich die Resonanzfrequenz etwas von der Eigenfrequenz, da jedes reale System gedämpft ist. Im Folgenden werden jedoch - wie auch häufig in der Literatur - die Begriffe Resonanzfrequenz und Eigenfrequenz synonym benutzt.

Die wichtigste Eigenfrequenz der Ultraschallschwingeinheit ist im Allgemeinen die Eigenfrequenz, bei der sich in der Ultraschallschwingeinheit eine stehende Longitudinalschwingung mit Wellenknoten und Wellenbäuchen ausbildet. Dabei bildet sich an den stirnseitigen Enden der Sonotrode jeweils ein Wellenbauch aus.

An einem der stirnseitigen Enden ist der Konverter angeschlossen, der die entsprechende Ultraschallanregungsfrequenz erzeugt. Gegebenenfalls ist zwischen Konverter und Sonotrode ein Booster oder Amplitudentransformator angeschlossen, der die Amplitude der Ultraschallschwingung, nicht aber die Frequenz, verändert. Durch das Vorsehen eines Boosters wird die Eigenfrequenz der Sonotrode und damit die Lage der Schwingungsknoten der Longitudinalschwingung nicht beeinflusst.

Bei der Bearbeitung von Materialien mit Hilfe von Ultraschall wird im Allgemeinen das zu bearbeitende Material zwischen der Sonotrode und einem (nicht zum Schwinggebilde gehörenden) Gegenwerkzeug, welches vereinzelt auch Amboss genannt wird, positioniert. Die mit dem zu bearbeitenden Material in Kontakt stehende Sonotrode überträgt dann die Ultraschallenergie auf das zu bearbeitende Material, welches dadurch beispielsweise verschweißt oder abgetrennt wird. Die zum Plastifizieren der Materialbahnen benötigte Wärme wird durch die Umwandlung von Ultraschallschwingungen in Reibungsenergie erzeugt. Aufgrund der Grenzflächen- und Molekularreibung entsteht somit Wärme, die den Kunststoff anschmelzen lässt.

Bei den meisten Sonotroden wird die longitudinale Ultraschallschwingung zum Energieübertrag über die Siegelfläche genutzt.

Es gibt jedoch auch Sonotroden, wie die hier beschriebene, mit einer im wesentlichen zylindermantelförmigen Siegelfläche, welche die sich quer zur longitudinalen Ausbreitungsrichtung der Ultraschallschwingung ausbildenden Radialultraschallschwingung zum Energieübertrag nutzen. Diesen werden meist während der Ultraschallbearbeitung um ihre Längsachse rotiert, so dass die Siegelfläche auf dem zu bearbeitenden Material abrollt. Mit diesen Sonotroden ist eine kontinuierliche Bearbeitung möglich.

Die Fläche des Gegenwerkzeuges, die dafür vorgesehen ist, mit dem zu bearbeitenden Material in Kontakt zu treten, wird häufig auch als Siegelfläche bezeichnet.

Besonders bei der Bearbeitung von dickeren Materialien, wie zum Beispiel beim Versiegeln einer Giebelnaht einer Faltschachtelpackung, wie zum Beispiel einer Milchpackung, reicht die Energie herkömmlicher Ultraschallschweißvorrichtungen bei der kontinuierlichen Bearbeitung, d.h. bei der Verwendung von Sonotroden mit zylindermantelförmiger Siegelfläche nicht mehr aus, um die Giebelnaht zuverlässig zu verschweißen.

Es müssen daher diskontinuerlich, d. h. getaktet arbeitende Sonotroden verwendet werden, mit denen die Verarbeitungszeit deutlich größer ist.

Die WO 2008/037256 zeigt eine Ultraschallschweißvorrichtung mit einer zylindermantelförmigen Siegelfläche. Zudem wird hier vorgeschlagen, eine zweite Sonotrode zur Ultraschallbearbeitung zu verwenden. Auch in der FR 2 082 090 ist eine entsprechende Sonotrode beschrieben.

Ausgehend von dem beschriebenen Stand der Technik ist es daher Aufgabe der vorliegenden Erfindung, eine Ultraschallschweißvorrichtung der eingangs genannten Art bereitzustellen, mit der sich mit geringer Energie auch dickere Materialien im kontinuierlichen Betrieb verarbeiten lassen.

Erfindungsgemäß wird diese Aufgabe durch eine Ultraschallschweißvorrichtung gemäß Anspruch 1 gelöst.

Genau wie bei der Sonotrode ist somit vorgesehen, dass das Gegenwerkzeug in Schwingung versetzt werden kann, ohne dass ein größerer Anteil dieser Schwingung auf die Halterung übertragen wird.

Darum muss der Punkt, an dem die Halterung an die Sonotrode oder das Gegenwerkzeug angreift, auf die Eigenschwingung der Ultraschallfrequenz $f_G$ abgestimmt sein. Wird das Gegenwerkzeug oder die Sonotrode in Schwingung, d.h. in Resonanz versetzt, dann bilden sich stehende Wellen innerhalb von Gegenwerkzeug oder Sonotrode mit Schwinungsmaxima und Schwingungsminima aus. Eine schwingungsentkoppelte Lagerung liegt nur dann vor, wenn die Halterung an die Sonotrode oder das Gegenwerkzeug in einem Bereich angreift, in dem ein Schwingungsminimum liegt.

Das Gegenwerkzeug sollte so ausgebildet sein, dass bei einer Eigenschwingung der Ultraschallfrequenz $f_G$ ein Schwingungsmaxima an der Siegelfläche vorliegt.

Wird nun ein Material zwischen Sonotrode einerseits und Gegenwerkzeug andererseits mit einer Ultraschallschwingung über die Sonotrode beaufschlagt, so kann das Gegenwerkzeug ebenfalls in Schwingung versetzt werden, was bewirkt, dass auch das Gegenwerkzeug das Material bearbeitet, wodurch die Schweißleistung verbessert wird.

Erfindungsgemäß wird auch das Gegenwerkzeug mit einer Ultraschalleigenschwingung angeregt, sodass das Material sowohl von der Sonotrode als auch von dem Gegenwerkzeug bearbeitet wird. Im Grunde genommen stellt dann auch das Gegenwerkzeug eine Sonotrode dar.

Erfindungsgemäß ist vorgesehen, dass die Eigenfrequenz $f_G$ nicht gleich der Frequenz $f_S$ und kein ganzzahliges Vielfaches hiervon ist. Es hat sich insbesondere gezeigt, dass vorzugsweise $\dfrac{|f_G - f_S|}{f_S} \leq 0{,}4$ und besonders bevorzugt $\dfrac{|f_G - f_S|}{f_S} \leq 0{,}2$ ist. Beispielsweise könnte die Sonotrode mit einer Frequenz von 30 kHz angeregt werden, während das Gegenwerkzeug mit einer Frequenz von 35 kHz angeregt wird. Die 30 kHz-Schwingung ist weit genug von der 35 kHz-Eigenfrequenz des Gegenwerkzeuges entfernt, sodass es zu nahezu keinem Energieübertrag zwischen Sonotrode einerseits und Gegenwerkzeug andererseits kommt.

Durch die unterschiedlichen Schwingungsfrequenzen kann die Ultraschallbearbeitung deutlich verbessert werden.

Besonders bevorzugt weist die Ultraschallschweißvorrichtung einen Antrieb zur Rotation der Sonotrode auf, wobei die Sonotrode im Wesentlichen rotationssymmetrisch ausgebildet ist.

In gleicher Weise kann ein Antrieb zur Rotation des Gegenwerkzeuges vorgesehen sein, wobei das Gegenwerkzeug vorzugsweise im Wesentlichen rotationssymmetrisch ausgebildet ist und eine zylindermantelförmige Siegelfläche aufweist. Dabei drehen sich Gegenwerkzeug und Sonotrode am besten gegensinnig, sodass das Material zwischen Sonotrode einerseits und Gegenwerkzeug andererseits während der Ultraschallbearbeitung zwischen Sonotrode und Gegenwerkzeug hindurchbewegt wird.

Die Siegelfläche der Sonotrode und/oder die Siegelfläche des Gegenwerkzeuges kann strukturiert sein, wobei unter Strukturierung jede Art von Vorsprung oder Vertiefung auf bzw. innerhalb der Siegelfläche verstanden wird.

In einer weiteren bevorzugten Ausführungsform ist der Abstand zwischen Sonotrode und Gegenwerkzeug einstellbar. Besonders bevorzugt ist ein Anschlag vorgesehen, der derart angeordnet ist, dass ein minimaler Abstand zwischen Sonotrode und Gegenwerkzeug eingehalten wird.

Weitere Vorteile, Merkmale und Anwendungsmöglichkeiten werden deutlich anhand der folgenden Beschreibung einer bevorzugten Ausführungsform. Es zeigen:

Figur 1 eine erste perspektivische Ansicht einer bevorzugten Ausführungsform,
Figur 2 eine zweite perspektivische Ansicht der Ausführungsform von Figur 1,
Figur 3 eine Draufsicht auf die Ausführungsform von Figur 1 und
Figur 4 eine Seitenansicht auf die Ausführungsform von Figur 1.

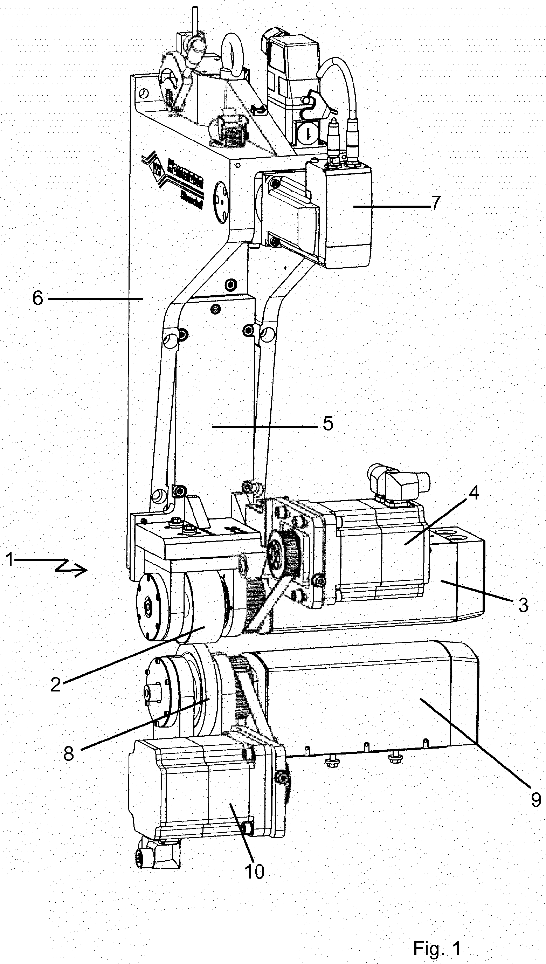

In Figur 1 ist eine erfindungsgemäße Ultraschallschweißvorrichtung gezeigt. Die Ultraschallschweißanlage 1 weist eine schwingungsentkoppelte Sonotrode 2 mit einer zylindermantelförmigen Siegelfläche auf. Die Sonotrode 2 ist über ein Amplitudentransformationsstück mit einem Konverter verbunden. Konverter und Amplitudentransformationsstück sind in dem Gehäuse 3 angeordnet. Mit Hilfe des Konverters kann die Sonotrode 2 in eine Ultraschallschwingung versetzt werden. Weiterhin ist ein Antrieb 4 vorgesehen, mit dessen Hilfe die Sonotrode 2 um ihre Längsachse rotiert werden kann. Die Sonotrode 2 bzw. deren Halterung ist an einem Schlitten 5 befestigt, welcher wiederum mit Hilfe des Motors 7 relativ zu dem Ständer 6 bewegt werden kann, um den Abstand der Sonotrode 2 gegenüber dem Gegenwerkzeug 8 einzustellen.

Mit Hilfe des Motors kann die Spaltbreite zwischen Sonotrode und Gegenwerkzeug eingestellt werden. Dadurch ist auch eine Regelung der Spaltbreite während der Bearbeitung möglich. So könnte z.B. die Spaltgröße gemessen werden und auf einen vorbestimmten Sollwert geregelt werden. Alternativ dazu könnte die Kraft, mit der die Sonotrode auf das Gegenwerkzeug bzw. auf das auf dem Gegenwerkzeug entlang geführte, zu bearbeitenden Material gemessen werden und auf einen vorbestimmten Wert geregelt werden. Für manche Anwendungsfälle kann auch die elektrische Aufnahmeleistung der Ultraschallschwingeinheit gemessen werden und auf einen vorbestimmten Wert geregelt werden. Stellgröße ist dabei die Position der Sonotrode, welche mit Hilfe des Motors verändert werden kann.

Auch das Gegenwerkzeug 8 ist über ein Amplitudentransformationsstück mit einem Konverter verbunden, wobei Konverter und Amplitudentransformationsstück in dem Gehäuse 9 angeordnet sind. Dies hat zur Folge, dass auch das Gegenwerkzeug 8 mit einer Ultraschallschwingung beaufschlagt werden kann. Das Gegenwerkzeug 8 hat ebenfalls eine zylindermantelförmige Siegelfläche und kann mit Hilfe des Antriebs 10 um seine Längsachse gedreht werden.

Man erkennt, dass die Siegelflächen des Gegenwerkzeuges und der Sonotrode in dieser Ausführungsform unterschiedliche Breiten aufweisen.

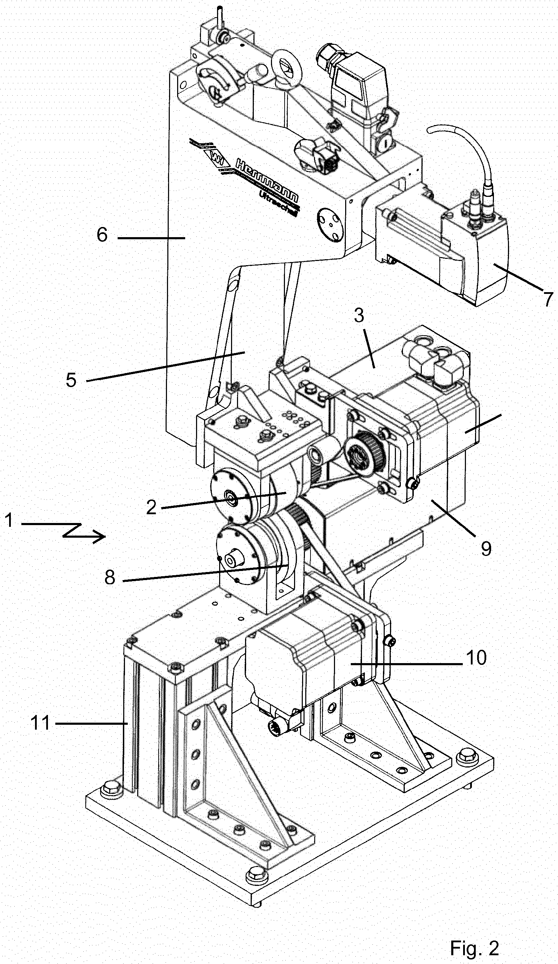

In Figur 2 ist eine zweite perspektivische Ansicht gezeigt. Hier ist auch zu erkennen, dass das Gegenwerkzeug 8 über seine Halterung am Maschinenständer 11 montiert ist. Dennoch ist auch hier die Lagerung des Gegenwerkzeugs 8 schwingungsentkoppelt, sodass das Gegenwerkzeug mit einer Ultraschallschwingung beaufschlagt werden kann, ohne dass ein großer Teil der Schwingungsenergie auf das Maschinengestell 11 übertragen wird.

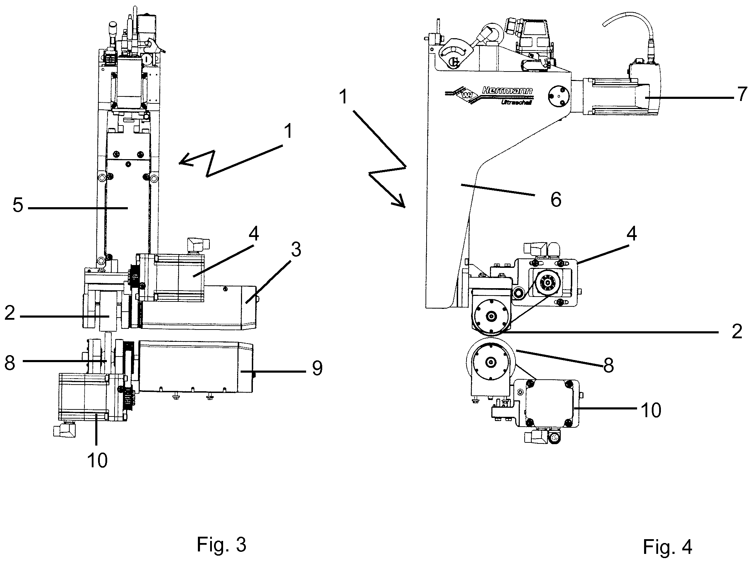

In den Figuren 3 und 4 sind zwei weitere Ansichten der Ausführungsform aus Figur 1 gezeigt. Das zu bearbeitende Material wird zwischen Sonotrode 2 und Gegenwerkzeug 8 hindurchbewegt und dabei verarbeitet. Die beschriebene Ausführungsform ist insbesondere für die Ultraschallbearbeitung von Giebelnähten besonders geeignet.

**Bezugszeichenliste**

1 Ultraschallschweißanlage
2 Sonotrode
3,9 Gehäuse
4, 10 Antrieb
5 Schlitten
6 Ständer
7 Motor
8 Gegenwerkzeug
11 Maschinengestell

**Patentansprüche**

1. Ultraschallschweißvorrichtung (1) zur Ultraschallbearbeitung eines Materials mit einer schwingungsentkoppelt gelagerten Sonotrode (2), welche eine zylindermantelförmige Siegelfläche aufweist, und einem Gegenwerkzeug (8), wobei ein Konverter mit der Sonotrode (2) gegebenenfalls über ein erstes Amplitudentransformationsstück verbunden ist und Sonotrode (2) und erster Konverter derart ausgelegt sind, dass die Sonotrode (2) mit einer Eigenschwingung der Ultraschallfrequenz $f_S$ in Schwingung versetzt werden kann, wobei das Gegenwerkzeug (8) eine Eigenschwingung der Ultraschallfrequenz $f_G$ hat und derart schwingungsentkoppelt gelagert ist, dass es mit der Ultraschallfrequenz $f_G$ angeregt werden kann,

wobei ein zweiter Konverter gegebenenfalls über einen zweites Amplitudentransformationsstück mit dem Gegenwerkzeug (8) verbunden ist und Gegenwerkzeug (8) und Konverter derart ausgelegt sind, dass das Gegenwerkzeug (8) mit einer Eigenschwingung der Frequenz $f_G$ in Schwingung versetzt werden kann,

**dadurch gekennzeichnet, dass** die Eigenfrequenz $f_G$ nicht gleich der Frequenz fs und kein ganzzahliges Vielfaches hiervon ist

2. Ultraschallschweißvorrichtung (1) nach Anspruch 1, **dadurch gekennzeichnet, dass** ein Antrieb (4, 10) zur Rotation der Sonotrode (2) vorgesehen ist, wobei die Sonotrode (2) vorzugsweise im wesentlichen rotationssymmetrisch ausgebildet ist.

3. Ultraschallschweißvorrichtung (1) nach einem der Ansprüche 1 bis 2, **dadurch gekennzeichnet, dass** ein Antrieb (4, 10) zur Rotation des Gegenwerkzeuges (8) vorgesehen ist, wobei das Gegenwerkzeug (8) vorzugsweise im wesentlichen rotationssymmetrisch ausgebildet ist und eine zylindermantelförmige Siegelfläche aufweist.

4. Ultraschallschweißvorrichtung (1) nach Anspruch 2 oder 3, **dadurch gekennzeichnet, dass** die Siegelfläche der Sonotrode (2) und/oder die Siegelfläche des Gegenwerkzeuges (8) strukturiert sind.

5. Ultraschallschweißvorrichtung (1) nach einem der Ansprüche 1 bis 4, **dadurch gekennzeichnet, dass** der Abstand zwischen Sonotrode (2) und Gegenwerkzeug (8) einstellbar ist, wobei vorzugsweise ein Anschlag vorgesehen ist, der derart angeordnet ist, dass ein minimaler Abstand zwischen Sonotrode (2) und Gegenwerkzeug (8) eingehalten wird.

6. Ultraschallschweißvorrichtung (1) nach einem der Ansprüche 1 bis 5, **dadurch gekennzeichnet, dass**

$$\frac{|f_G - f_S|}{f_S} \leq 0,4 \quad \text{und} \quad \text{vorzugsweise}$$

$$\frac{|f_G - f_S|}{f_S} \leq 0,2 \text{ ist.}$$

**Claims**

1. An ultrasound welding device (1) for ultrasonic processing of a material with a sonotrode (2) which is mounted in vibration-decoupled relationship and which has a sealing surface in the shape of a cylinder surface, and a counterpart tool (8), wherein a converter is connected to the sonotrode (2) optionally by way of a first amplitude transformation portion and the sonotrode (2) and the first converter are so designed that the sonotrode (2) can be caused to vibrate with a natural vibration of the ultrasonic frequency fs, wherein the counterpart tool (8) has a natural vibration of the ultrasonic frequency $f_G$ and is mounted in vibration-decoupled relationship in such a way that it can be excited with the ultrasonic frequency $f_G$,
wherein a second converter is connected to the counterpart tool (8) optionally by way of a second amplitude transformation portion and the counterpart tool (8) and the converter are so designed that the counterpart tool (8) can be caused to vibrate with a natural vibration of the frequency $f_G$,
**characterised in that** the natural frequency $f_G$ is not equal to the frequency $f_S$ and is not an integral multiple thereof.

2. An ultrasound welding device (1) as set forth in claim 1 **characterised in that** there is provided a drive (4, 10) for rotation of the sonotrode (2), wherein the sonotrode (2) is preferably of a substantially rotationally symmetrical configuration.

3. An ultrasound welding device (1) as set forth in one of claims 1 through 2 **characterised in that** there is provided a drive (4, 10) for rotation of the counterpart tool (8), wherein the counterpart tool (8) is preferably of a substantially rotationally symmetrical configuration and has a sealing surface in the shape of a cylinder surface.

4. An ultrasound welding device (1) as set forth in claim 2 or claim 3 **characterised in that** the sealing surface of the sonotrode (2) and/or the sealing surface of the counterpart tool (8) are structured.

5. An ultrasound welding device (1) as set forth in one of claims 1 through 4 **characterised in that** the spacing between sonotrode (2) and counterpart electrode (8) is adjustable, wherein there is preferably provided an abutment so arranged that a minimum spacing between sonotrode (2) and counterpart tool (8) is observed.

6. An ultrasound welding device (1) as set forth in one of claims 1 through 5 **characterised in that**

$$\frac{|f_G - f_S|}{f_S} \le 0.4 \quad \text{and} \quad \text{preferably}$$

$$\frac{|f_G - f_S|}{f_S} \le 0.2.$$

**Revendications**

1. Dispositif de soudage par ultrasons (1) pour le traitement d'un matériau par ultrasons, comprenant une sonotrode (2) supportée avec découplage vibratoire qui comprend une surface de scellage en forme d'enveloppe cylindrique, et un contre-outil (8), un convertisseur étant relié à la sonotrode (2) via une première pièce de transformation d'amplitude et la sonotrode (2) et le premier convertisseur étant conçus de façon que la sonotrode (2) puisse être mise en vibration à une oscillation propre de fréquence d'ultrasons fs, le contre-outil (8) ayant une oscillation propre de fréquence d'ultrasons $f_G$ et étant supporté avec découplage vibratoire de façon qu'il puisse être excité avec la fréquence d'ultrasons $f_G$,
un deuxième convertisseur étant relié, le cas échéant, par une deuxième pièce de transformation d'amplitude au contre-outil (8) et le contre-outil (8) et le convertisseur étant conçus de façon que le contre-outil (8) puisse être mis en vibration avec une oscillation propre de fréquence d'ultrasons $f_G$,
**caractérisé en ce que** la fréquence d'oscillation propre $f_G$ n'est pas égale à la fréquence fs ni n'en est un multiple entier.

2. Dispositif de soudage par ultrasons (1) selon la revendication 1, **caractérisé en ce qu'**il est prévu un entraînement (4, 10) pour la rotation de la sonotrode (2), la sonotrode (2) étant formée de préférence sensiblement à symétrie de révolution.

3. Dispositif de soudage par ultrasons (1) selon l'une des revendications 1 à 2, **caractérisé en ce qu'**il est prévu un entraînement (4, 10) pour la rotation du contre-outil (8), le contre-outil (8) étant formé de préférence sensiblement à symétrie de révolution et comprenant une surface de scellage en forme d'enveloppe cylindrique.

4. Dispositif de soudage par ultrasons (1) selon la revendication 2 ou 3, **caractérisé en ce que** la surface de scellage de la sonotrode (2) et/ou la surface de scellage du contre-outil (8) sont structurées.

5. Dispositif de soudage par ultrasons (1) selon l'une des revendications 1 à 4, **caractérisé en ce que** la distance entre la sonotrode (2) et le contre-outil (8) est réglable, où, de préférence, une butée est prévue qui est disposée de façon qu'une distance minimale entre la sonotrode (2) et le contre-outil (8) puisse être maintenue.

6. Dispositif de soudage par ultrasons (1) selon l'une des revendications 1 à 5, **caractérisé en ce qu'**il est

$$\frac{|f_G - f_S|}{f_S} \leq 0,4$$ et de préférence

$$\frac{|f_G - f_S|}{f_S} \leq 0,2 \ .$$

Fig. 1

Fig. 2

EP 2 945 793 B1

Fig. 3

Fig. 4

**IN DER BESCHREIBUNG AUFGEFÜHRTE DOKUMENTE**

**In der Beschreibung aufgeführte Patentdokumente**

- WO 2008037256 A
- FR 2082090